# EUROPEAN PATENT SPECIFICATION

(11) **EP 2 673 565 B1**
(45) Date of publication and mention of the grant of the patent: **01.04.2015**
(21) Application number: 12701867.9
(22) Date of filing: 25.01.2012
(51) Int. Cl.: F23K 5/20, F23K 5/22

(54) **AN ARRANGEMENT FOR PREPARATION OF LIQUID FUEL FOR COMBUSTION AND A METHOD OF PREPARING LIQUID FUEL FOR COMBUSTION**
ANORDNUNG ZUR HERSTELLUNG VON FLÜSSIGBRENNSTOFF UND VERFAHREN ZUR HERSTELLUNG VON FLÜSSIGBRENNSTOFF ZUR VERBRENNUNG
AGENCEMENT POUR LA PRÉPARATION D'UN COMBUSTIBLE LIQUIDE POUR LA COMBUSTION ET PROCÉDÉ POUR LA PRÉPARATION D'UN COMBUSTIBLE LIQUIDE POUR LA COMBUSTION

(30) Priority: 10.02.2011 EP 11154018
(43) Date of publication of application: 18.12.2013
(73) Proprietor: Siemens Aktiengesellschaft, 80333 München (DE)
(72) Inventor: SHEPHERD, Andrew, Branston Lincoln Lincolnshire LN4 1PA (GB)
(74) Representative: Maier, Daniel Oliver
(86) International application number: PCT/EP2012/051115
(87) International publication number: WO 2012/107287

(56) References cited:
- GB-A- 688 201
- GB-A- 751 635
- US-A- 2 851 197
- US-A- 4 081 234

## Description

### TECHNICAL FIELD OF THE INVENTION AND PRIOR ART

The present invention relates to a preparation of liquid fuel for combustion, particularly for ignition in burners in gas turbines.

In such a gas turbine known in the state of the art, for example as disclosed in EP 1 953 454 A1, a gas duct or gas flow path is routed through a combustion section/system located between a compressor and a turbine section. The combustion section may include an annular array of combustors or a single annular combustor. High pressure air from the compressor flows through the combustion section where it is mixed with fuel and burned. As mentioned above, the combustors comprise (at least) one burner, and (at least) one igniter for igniting the air/fuel mixture especially during start up of the gas turbine.

Combustion gases exit the combustion section to power the turbine section which drives the compressor. In single-shaft arrangements a high-pressure and a low-pressure turbine of the turbine section are mechanically connected and together drive an output power shaft. In twin-shaft arrangements a low-pressure turbine (power turbine) is mechanically independent, i.e. only drives the output power shaft, and a high-pressure turbine, or so called compressor turbine, drives the compressor. This combination acts as a gas generator for the low-pressure turbine. The combustion gases exit the turbine section through an exhaust duct.

In recent years, increasingly stringent emissions standards have made a lean, premixed combustion more desirable in power generation and industrial applications than ever before, since this combustion mode provides low NOx and CO emissions without water addition. Lean, premixed combustion of natural gas or liquid fuel avoids the problems associated with diffusion combustion and water addition.

As a result, lean, premixed combustion has become a foundation for modern Dry Low Emissions (DLE) gas turbine combustion systems. The DLE combustor, for example as disclosed in EP 0 747 636 A1, being developed require precise control of the combustion process. The pre-mixers and combustor must generate and receive, respectively, the correct mixture of air and fuel, and control the combustion temperature to limit emissions to acceptable levels.

Starting such gas turbines on liquid fuel, e.g. kerosene or diesel, is associated with poor reliability. In starting phases gas turbines operate at low speed while supplying liquid fuel at low pressure and at low temperature. Low pressure as well as low temperature makes it harder for the liquid fuel to ignite and less reliable for the gas turbine to start.

The pressure of the liquid fuel supplied is used to break the liquid fuel in small droplets - using a mechanical device, i.e. an atomizer, - prior to the ignition. Breaking liquid fuel in droplets increases a surface area of the liquid fuel, and a small amount of fuel vapour forms around the droplets. This is ignited by the ignition spark.

While supplying liquid fuel in the starting phase at low pressure the amount of droplets and the surface area of the liquid fuel are decreased. This makes it harder for the liquid fuel to ignite and less reliable for the gas turbine to start. Further more - liquid fuel provided in the starting phase for ignition at lower temperature needs more energy to be added to the liquid fuel for the liquid fuel to ignite and gas turbine to start. GB 688 201 discloses a gas turbine burner according to the preamble of claim 1.

As a solution for these ignition difficulties by starting a gas turbine on liquid fuel the liquid fuel could be supplied at higher pressure to increase the amount of small droplets and the surface area of the liquid fuel to ignite. As the fuel flow needed to start the gas turbine is fixed for each ambient condition, the increased pressure would have to be e.g. supplied via separate starting nozzles that are switched off when the gas turbine is running.

Other solutions for these ignition difficulties are based on extra gas systems providing pressurized gas in the starting phase, for example by using gas bottles, which makes it easier for the gas turbine to start. But it is seen to be difficult to ensure a sufficient reliability without using gas systems.

### SUMMARY OF THE INVENTION

It is a first objective of the present invention to provide a method and an arrangement for preparing liquid fuel for combustion to make it easier for the liquid fuel to ignite in the burners.

It is a second objective of the invention to provide an arrangement and a method by which the above-mentioned shortcomings can be mitigated, and especially an easier and a more reliable ignition of liquid fuel in the burners of a gas turbine.

These objectives are according to the invention achieved by providing an arrangement according to claim 1.

These objects are according to the invention also achieved by providing a method according to claim 13.

In other words - the invention provides a source of heated liquid fuel, particularly heated high pressurized liquid fuel, for example kerosene, in a reservoir. The reservoir is arranged in parallel with a main fuel feed of a combustion system and can be filled by said main fuel feed and/or evacuated into said main fuel feed. By evacuating heated liquid fuel in said main fuel feed the temperature of the liquid fuel for the burners to ignite will be increased - and the liquid fuel will be ignite more easily, i.e. the gas turbine will start more reliably. The reservoir contains a heating means, which heat the liquid fuel filled in the reservoir, particularly while circulating in the reservoir.

By arranging the reservoir in parallel with the main supply, the reservoir, i.e. the heating means could be removed for cleaning or replacement without interrupting a gas turbine operation.

While using the invention for preparing liquid fuel for starting a gas turbine the first predetermined condition could define or correlate with (time when) the gas turbine is being prepared to start. The second predetermined condition could be a date when the gas turbine is started. This second condition/date could correlate - but not necessarily - with the point when the liquid fuel to be heated in the reservoir achieves a specific/suitable temperature or a heating period/duration expires.

The heating operation can be stopped at a predetermined or suitable temperature. This temperature, preferably measured by a thermocouple and/or controlled by a control system, should preferably be high enough to significantly increase an amount of vaporisation of a fuel when it is atomised in a burner. Such a suitable temperature could be about 50 °C up to 150 °C or more.

The heated liquid fuel can - particularly by use of at least one valve - be directed to burners of the combustion system - via the main fuel feed - when the gas turbine is started. After successful ignition of the fuel in the burners of the combustion system, the fuel flow/feed can be switched back - particularly by use of at least one valve - to normal unheated fuel.

The reservoir can be sized to contain enough liquid fuel for one, two or several starts of a gas turbine as required, with a signal to indicate when the temperature has reached a predetermined or desired level. The signal could be generated by a sensor - or based on signal generated by a sensor, particularly of a thermocouple, arranged in the reservoir - and/or could be evaluated and/or processed in a control system.

According to a preferred embodiment the reservoir is sized to contain liquid fuel for two starts of the gas turbine, so that - if the gas turbine is stopped after a first start - enough (heated) liquid fuel is available in the reservoir for a second start.

It has been realized that the invention provides - in a easy and efficient way - a source of heated high pressure liquid fuel, so that - when the fuel is expanded to lower pressure and broken into droplets - it vaporises more easily, allowing more reliable ignition. In other words - the invention provides in an easy and efficient way a recirculating circuit for heating pressurized liquid fuel in order for it to evaporate more easily when expanded to a lower pressure during start of a gas turbine.

Usually pressurized liquid fuel is supplied at a pressure several times e.g. 3-10 that of the compressor delivery pressure in order to provide the fine droplets required for DLE combustion. During start the supply pressure is reduced to only a few bars over the compressor delivery pressure, which in itself is then typically not significantly above atmospheric or ambient pressure.

According to a preferred embodiment of the invention a flow circuit could be realized in said reservoir or with said reservoir as part of the flow circuit. Said reservoir could comprise a pump to pump the liquid fuel along a pipe, a duct from the reservoir towards the burners, with a return pipe to an opposite side of the reservoir - defining said flow circuit.

During the heating operation/period the liquid fuel circulates around said flow circuit to ensure that both - fuel and pipework - reach a required temperature. The continuous flow of fuel around the circuit to be heated also means that the fuel is not in contact with the heating means for an extended period of time. These reduce the risk of coking/overheating of liquid fuel on/by the heating means.

According to a further preferred embodiment of the invention said reservoir or other elements of the flow circuit, as for example pipes, ducts, comprises at least one thermocouple positioned at a probing point in said reservoir or said other elements, i.e. in said flow circuit. Said at least one thermocouple provides a signal to a control system, indicating that the temperature of the fuel and/or the pipework has reached a required level for liquid fuel starting.

Therefore a control system could be provided to evaluate and/or to process said signal generated by said thermo sensor.

According to a preferred embodiment of the invention the connection of the reservoir with the (main) fuel feed can be realized by valves, particularly by two-way valves, arranged at an inlet end ("fill in end") and/or an outlet end ("evacuating end") of said reservoir or flow circuit providing different switch settings, i.e. phases of operation.

A valve positioned in the flow circuit, particularly at the outlet end of the reservoir or flow circuit, could be switched to direct the liquid fuel (in the reservoir) either (1) back to the reservoir, in a heating phases, or (2) into the pipes to the burners, in a starting phase. A valve positioned in the flow circuit, particularly at the inlet end of the reservoir or flow circuit, could be switched to direct the liquid fuel of the main fuel feed either (1) (directly) into the burners, both for normal operation and in a heating phase, or (2) towards the reservoir, in a starting phase. When the valves are in the starting positions, i.e. in position of/for the starting phase, a pressure of the unheated/cold fuel of the main supply then "drives" the heated fuel out of the reservoir into the burners.

According to a preferred embodiment of the invention the arrangement/method could operate in two phases, a heating phase and a starting phase.

In the heating phase - a gas turbine is preparing to start on liquid fuel - the reservoir is filled with (unheated) liquid fuel by/out of the main fuel feed. Valves - preferable connecting the reservoir with the main fuel feed at an inlet end and an outlet end of the reservoir or flow circuit - , particularly two-way valves, are switched so that the liquid fuel is isolated in the reservoir/in a heating circuit realized in the reservoir - or with the reservoir as part of the flow circuit. A (small) fuel pump could circulate the liquid fuel in the reservoir, which could dump back into an inlet end of the reservoir. The heating means/the heater is switched on for heating the isolated liquid fuel in the reservoir. A thermo sensor, for example a thermocouple, indicates when the temperature of the liquid fuel to be heated in the reservoir is high enough for the gas turbine starting.

When this temperature is reached, the heating means/the heater is turned off. If the temperature drops too low before the gas turbine is started, the heater is switched on again.

In the starting phase - the gas turbine is started - the valves, i.e. the two-way valves, are switched so that liquid fuel of the main fuel feed (main fuel flow) enters the inlet end of the reservoir (or flow circuit) and pushes (evacuates) the heated liquid fuel into the supply, i.e. back into the main fuel feed, to the burner. The evacuation of the reservoir could be supported by the fuel pump of the reservoir if needed.

An advantage of the proposed arrangement by arranging the reservoir in parallel with the main fuel feed, the reservoir, i.e. the heating means, can be removed for cleaning or replacement without interrupting the gas turbine operation.

According to a preferred embodiment of the invention the gas turbine is a Dry Low Emission gas turbine, that means the gas turbine is operating with a Dry Low Emission combustion. While supplying heated liquid fuel, particularly heated pressurized liquid fuel, only for starting - during operation the flame of the combustion system will provide enough temperature as well as more/higher pressure is available during operation - the rate of heating does not need to be high. Further to that - while supplying heated liquid fuel from a reservoir in which a predetermined amount of liquid fuel is heated - instead of heating a continuous flow of liquid fuel flowing upstream to the burners - the rate of heating does not need to be high.

Because the rate of heating does not need to be high, the temperature of the heating means and/or the sizes of the heating means themselves do not need to be high/large which reduce the risk of coking/overheating of liquid fuel by the heating means. Small heaters - preferably depending on a size of the gas turbine - could be used by the invention.

Further advantages as well as advantageous features of the invention appear from the following description.

### BRIEF DESCRIPTION OF THE DRAWINGS

With reference to the appended drawings, below follows a specific description of embodiments of the invention cited as examples.

In the drawings:
- Figure 1: is a schematic cross-sectional view through a part of a known gas turbine engine with burners, to which an arrangement for preparation of a fuel for combustion according to the present invention may be applied;
- Figure 2: is an enlarged schematic view of a recirculating circuit for heating pressurized liquid fuel operating in a heating phase according to the present invention;
- Figure 3: is an enlarged schematic view of a recirculating circuit for heating pressurized liquid fuel operating in a starting phase according to the present invention.

### DETAILED DESCRIPTION OF EMBODIMENTS OF THE INVENTION

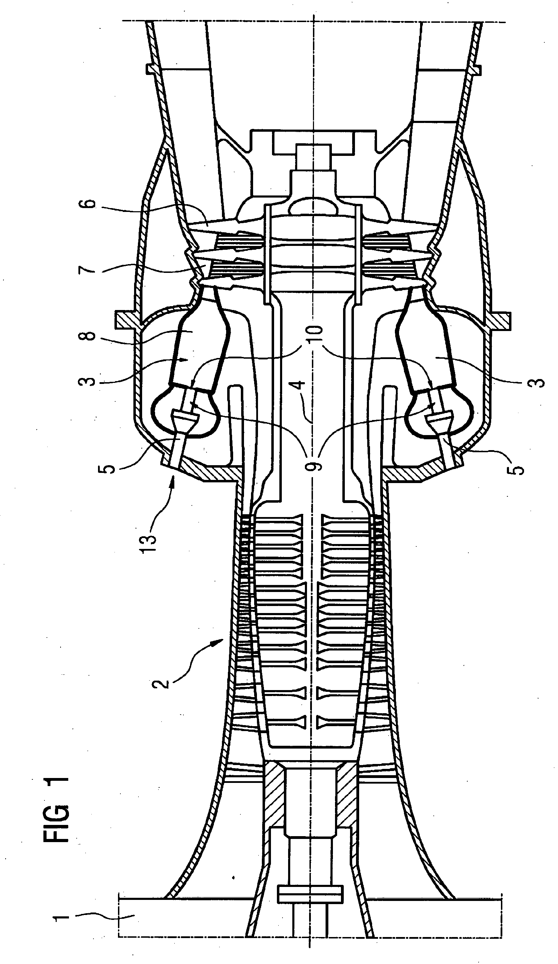

The present invention is directed to an arrangement for preparation of a liquid fuel for combustion in a gas turbine as used in for instance a power plant as schematically illustrated in Figure 1.

The gas turbine engine as shown in Figure 1 has an air inlet 1 at one end followed by a compressor 2 for compressing the air from said inlet. Combustors 3 having a can-like shell are distributed around a turbine shaft 4. Liquid Fuel, that means in this case heating oil, supplied by a fuel supply 13 is introduced into the respective burners 9 at 5 and is there mixed with a part of said air from the air inlet 1 for the combustion.

Hot gases resulting from the combustion drive turbine blades 6 of the turbine part of the gas turbine engine and are guided by guide vanes 7.

The combustion chamber 8 has a burner aperture 10 through which the burner 9 is fitted. The burner 9 comprises a burner space where the fuel and air is mixed before being released into the combustion chamber 8 via the burner aperture 10. A supplying means is adapted to supply liquid fuel through an internal passage inside the burner body member for said combustion. This liquid fuel is atomized and sprayed into said burner space of the burner 9 through a pilot fuel injector nozzle. An ignition means (not shown) is located close to said nozzle for igniting the fuel inside the burner space for commencing combustion.

One or more liquid fuel nozzles are located in said burner space 9 for supplying to the space atomized liquid fuel for evaporation and later combustion.

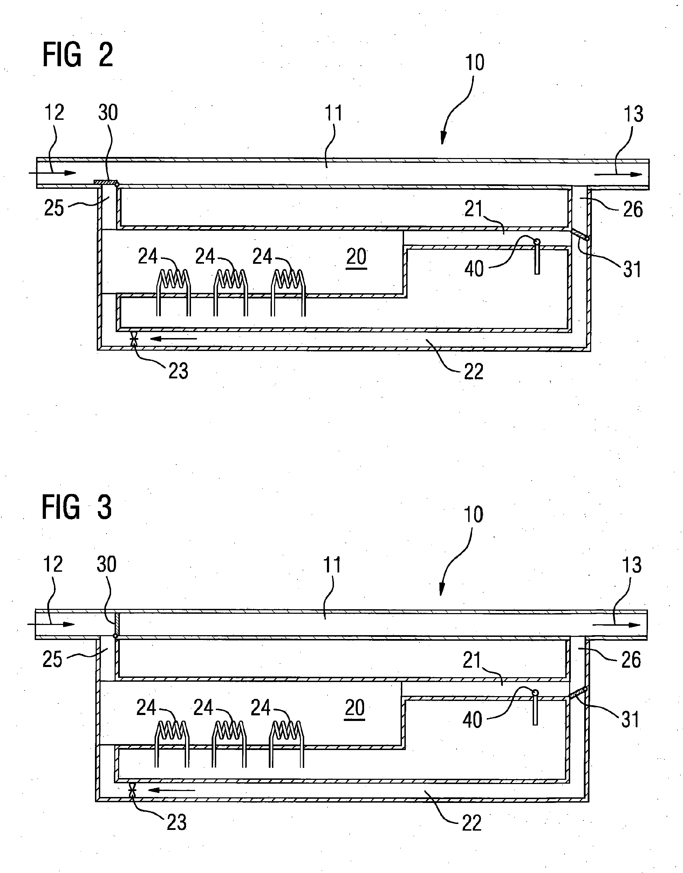

The general function and operational modes of an arrangement for preparation of the liquid fuel for combustion for instance in a gas turbine will now be explained with reference to Figures 2 and 3.

The present invention is based on the use of a recirculating circuit 10 as shown in Figures 2 and 3 for heating pressurized liquid fuel in order for it to evaporate more easily when expanded to a lower pressure and broken into droplet's during start of the gas turbine allowing a more reliable ignition.

The recirculation circuit 10 is arranged in parallel with the main liquid fuel feed 11 - downstream a fuel supply 12 and upstream the burners of the gas turbine supplied by a fuel supply 12 via the main fuel feed 11. The recirculation circuit 10 comprises a reservoir 20 with one or more heaters 24 for heating liquid fuel inside the reservoir 20, a pipe 21 from the reservoir 20 towards the burners and a return pipe 22 to the opposite side of the reservoir 20 - all together completing a flowing circuit, i.e. the recirculating circuit 10 - so that liquid fuel, pressurized liquid fuel - supplied by the main fuel feed 11 into the reservoir 20 - could circulate around this circuit 10.

The recirculation circuit 10 further comprises a small pump 23 arranged in the return pipe 22 for pumping the liquid fuel along the pipe 21 from the reservoir 20 towards the burners and to circulate in the recirculating circuit 10.

A thermocouple 40 is arranged in the recirculating circuit 10, i.e. the thermocouple 40 is - as it can be seen in Figures 2 and 3 - located in the pipe 21. The thermocouple 40 is generating signals - according to a temperature of the liquid fuel in the reservoir 20, i.e. circulating in the recirculating circuit 10. The signals are transmitted to a control system for controlling the temperature of the liquid fuel, i.e. a temperature in the recirculating circuit 10, as well as the operational modes of the recirculating circuit 10.

The recirculating circuit 10 is connected to the main fuel feed 11 by a first 30 and a second two-way valve 31 located at an inlet end 25 and an outlet end 26 of the recirculating circuit 10. The inlet end 25 - with the first valve 30 - is located upstream of the outlet end 26 - with the second valve 31 - in relation to the main fuel feed 11 so that liquid fuel flowing in the main fuel feed 11 could flow into the reservoir 20 at the inlet end 30. The reservoir 20 could be evacuated via the outlet end 26, i.e. the second valve 31, back to the main fuel feed 11 again.

The reservoir 20 is sized for enough liquid fuel for two starts of a gas turbine as required.

The valves 30, 31 could be switched - in control of the control system - in different switch settings relating to different operation modes as shown in Figures 2 and 3 and as described as follows.

Figure 2 is illustrating the recirculating circuit 10 in a heating phase.

The gas turbine is preparing to start on liquid fuel. The reservoir 20 is filled with liquid fuel at a normal starting pressure. The heaters 24 are switched on. The two-way valves 30, 31 are switched so that the liquid fuel is isolated in the recirculating circuit 10. The small fuel pump 23 circulates the fuel, which dumps back into the inlet end 25 of the reservoir. The thermocouple 40 indicates when the temperature of the liquid fuel is high enough for the gas turbine starting.

When this temperature, for example about 80 °C, is reached, the heaters 24 are turned off. If the temperature drops too low before the gas turbine is started, the heaters 24 are switched on again.

Figure 3 is illustrating the recirculating circuit 10 in a starting phase.

The gas turbine is started. The two-way valves 30, 31 are switched so that the main fuel flow enters the inlet end 25 of the recirculating circuit 10 and the reservoir 20, and pushes the heated liquid fuel into the main fuel feed 11 - via the outlet end 26 of the recirculating circuit 10 - to the burner.

After successful ignition of the burners, the valves 30, 31 could be switched back in the heating positions, i.e. in position of/for the heating phase (Figure 2), or normal position, i.e. in position of/for the normal operating phase (Figure 2), so that the fuel supply 12 fed normal unheated fuel directly to the combustion system 8.

As looking at the switch settings of the valves 30, 31 as shown in Figures 2 and 3: the valve 31 could be switched to direct the liquid fuel either (1) back to the reservoir 20, in the heating phases, or (2) into the main fuel feed 11 to the burners, in a starting phase; the valve 30 could be switched to direct the liquid fuel of the main fuel feed 11 either (1) (directly) into the burners, both for normal operation and in the heating phase, or (2) towards the reservoir 20, in the starting phase.

When the valves 30, 31 are in the starting positions, i.e. in position of/for the starting phase (Figure 3), a pressure of the liquid fuel of the main fuel supply 12 then "drives" the heated liquid fuel out of the reservoir 20, i.e. the recirculating circuit 10, into the burners, that means that heated liquid fuel can be directed into the burners when the gas turbine is started.

The heating operation will be stopped at a suitable temperature - measured by the thermocouple 40 and controlled by the control system. This temperature will be high enough to significantly increase an amount of vaporisation of a fuel when it is atomised in the burner.

The recirculation circuit 10 is arranged in parallel with the main fuel feed 11, so that the heaters 24 can be removed for cleaning or replacement without interrupting the gas turbine operation.

Because the rate of heating does not need to be high, the temperature of the heaters 24 themselves does not need to be high. Also the continuous flow of liquid fuel around the recirculation circuit 10 means that the liquid fuel is not in contact with the heaters 24 for an extended period of time. Both these factors reduce the risk of coking/overheating of liquid fuel by the heaters 24.

More generally, in a preferred embodiment, the invention may be directed to a method of preparing a liquid fuel for combustion according to any preceding method claim, used for preparing liquid fuel for starting a gas turbine, particularly starting a DLE gas turbine.

In a further preferred embodiment, the invention may be directed to a method of preparing a liquid fuel for combustion according to any preceding method claim, wherein said heated liquid fuel is directed to a burner 9 of a combustion system 3 of a gas turbine when the gas turbine is started.

## Claims

1. An arrangement for preparation of a liquid fuel for combustion, particularly for ignition, comprising a main fuel feed (11) for feeding liquid fuel from a fuel supply (12) to a burner (9), a reservoir (20) for liquid fuel and a means for heating (24) liquid fuel in said reservoir (20) wherein said reservoir (20) is arranged in parallel with said main fuel feed (11) **characterised in that** an inlet of said reservoir (20) is arranged upstream of an outlet of said reservoir (20) and said reservoir (20) is connected to said main fuel feed (11) via a valve (30) to be filled at a first predetermined condition with liquid fuel fed in by said main fuel feed (11) and/or said reservoir (20) is connected to said main fuel feed (11) via a valve (31) to be evacuated at a second predetermined condition of heated liquid fuel heated in said reservoir (20) into said main fuel feed (11).

2. The arrangement for preparation of a liquid fuel for combustion according to any preceding claim, wherein said reservoir (20) is sized to contain liquid fuel for one, two or several starts of a gas turbine.

3. The arrangement for preparation of a liquid fuel for combustion according to any preceding claim, wherein said arrangement or said reservoir (20) comprises a sensor (40), particularly a thermo sensor and/or a thermocouple, generating a signal to indicate when a temperature of said liquid fuel to be heated in said reservoir (20) has reached a predetermined temperature, i.e. a desired level, and/or wherein said arrangement or said reservoir (20) comprises a pipe (21), a return pipe (22), a duct realizing a flow circuit (10) in said reservoir (20) or with said reservoir (20) as a part of a flow circuit (10).

4. The arrangement for preparation of a liquid fuel for combustion according to the preceding claim, wherein said arrangement or said reservoir (20) comprises a pump (23) to pump the liquid fuel along said pipe (21), said duct from said reservoir (20) towards a burner (9) and/or to circulate the liquid fuel in said flow circuit (10).

5. The arrangement for preparation of a liquid fuel for combustion according to any preceding claim, wherein a flow circuit (10) is realized in said reservoir (20) or with said reservoir (20) as part of the flow circuit (10).

6. The arrangement for preparation of a liquid fuel for combustion according to any preceding claim, wherein said arrangement, said reservoir (20) or said flow circuit (10) comprises at least one valve (30, 31), particularly a two-way valve and/or arranged at an inlet end ("fill in end") (25) and/or an outlet end ("evacuating end") (26) of said reservoir (20) or flow circuit (10).

7. The arrangement for preparation of a liquid fuel for combustion according to any preceding claim, wherein said liquid fuel is a pressurized liquid fuel and/or said liquid fuel is a premium liquid fuel, particularly kerosene or a heating oil, for a Dry Low Emission combustion.

8. The arrangement for preparation of a liquid fuel for combustion according to any preceding claim, used to operate in two phases,
- a heating phase, wherein a gas turbine is preparing to start on liquid fuel, and
- a starting phase wherein the gas turbine is started.

9. The arrangement for preparation of a liquid fuel for combustion according to the preceding claim, used in the heating phase wherein
- valves (30, 31), particularly arranged at an inlet end (25) and/or at an outlet end (26) of said reservoir (20) or flow circuit (10), are/is switched so that said reservoir (20) is filled with unheated liquid fuel by/out of the main fuel feed (11) and/or liquid fuel is isolated in said reservoir (20),
- the heating means (24) is switched on for heating the isolated liquid fuel in said reservoir (20), particularly the liquid fuel circulating in said reservoir (20),
- a thermo sensor (40) indicates when a temperature of the liquid fuel to be heated in said reservoir (20) is high enough for the gas turbine starting and
- said heating means (24) is turned off, when this temperature is reached.

10. The arrangement for preparation of a liquid fuel for combustion according to the preceding claim, used in the heating phase wherein
the arrangement is adapted to that if the temperature of said liquid fuel drops below a threshold before the gas turbine is started, said heating means (24) is switched on again.

11. The arrangement for preparation of a liquid fuel for combustion according to claim 5, used in the starting phase wherein
valves (30, 31), particularly arranged at an inlet end (25) and/or at an outlet end (26) of the reservoir (20) or flow circuit (10), are/is switched so that liquid fuel fed in said main fuel feed (11) enters the inlet end (25) of said reservoir (20) or flow circuit (10) and pushes said heated liquid fuel from said reservoir (20) back into the main fuel feed (11).

12. The arrangement for preparation of a liquid fuel for combustion according to any preceding claim, used for a recirculating circuit (10) for heating pressurized liquid fuel in order for it to evaporate when expanded to a lower pressure during a start of a gas turbine.

13. Method of preparing a liquid fuel for combustion, particularly for ignition, comprising the steps of:
- filling at first predetermined condition a reservoir (20) with liquid fuel of a fuel stream fed in a main fuel feed (11) wherein said reservoir (20) is arranged in parallel to said main fuel feed (11),
- heating liquid fuel in said reservoir (20),
- evacuating at a second predetermined condition said reservoir (20) of heated liquid fuel heated in said reservoir (20) into said main fuel feed (11) downstream said filling.

14. Method of preparing a liquid fuel for combustion according to any preceding method claim, wherein
said first predetermined condition define or correlate with a time when a gas turbine is starting preparations to start, and/or
said second predetermined condition define or correlate with a time when the gas turbine is started.

15. Method of preparing a liquid fuel for combustion according to any preceding method claim, wherein said second predetermined condition correlate with a time said liquid fuel to be heated in said reservoir (20) achieves a specific/suitable temperature or with a time a heating period/duration is expired.

16. Method of preparing a liquid fuel for combustion according to any preceding method claim, wherein a heating operation of said liquid fuel in said reservoir (20) is stopped at a predetermined temperature, particularly measured by a thermocouple (40) and/or controlled by a control system.

17. Method of preparing a liquid fuel for combustion according to the preceding method claim, wherein said predetermined temperature is high enough to increase an amount of vaporisation of fuel when it is atomised in a burner (9).

18. Method of preparing a liquid fuel for combustion according to any preceding method claim, wherein said main fuel feed (11)/supply of burners (9) of a combustion system (3) is switched back to unheated fuel fed in said main fuel feed (11)/supply after said ignition of the fuel.

19. Method of preparing a liquid fuel for combustion according to any preceding method claim, wherein, particularly by use of at least one valve (30, 31) positioned in said flow circuit (10), particularly at the outlet end (26) of the reservoir (20) or flow circuit (10), the liquid fuel is directed (in the reservoir) either
a) back to the reservoir (20), in a heating phase or a normal operation phase, or
b) into pipes to burners (9), in a starting phase.

20. Method of preparing a liquid fuel for combustion according to any preceding method claim, wherein said liquid fuel of said main fuel feed (11)/supply is directed either
a) directly into a burner (9) for a normal operation or in a heating phase, or
b) towards said reservoir (20), in a starting phase.

21. Method of preparing a liquid fuel for combustion according to any preceding method claim, wherein a pressure of the unheated/cold fuel of said main fuel feed (11)/supply drives said heated liquid fuel out of said reservoir (20).

## Patentansprüche

1. Anordnung zur Vorbereitung eines Flüssigbrennstoffs für die Verbrennung, insbesondere für die Zündung, welche eine Hauptbrennstoffzuführung (11) zum Zuführen von Flüssigbrennstoff von einer Brennstoffversorgung (12) zu einem Brenner (9), einen Behälter (20) für Flüssigbrennstoff und ein Mittel zum Erwärmen (24) von Flüssigbrennstoff in dem Behälter (20) umfasst, wobei der Behälter (20) parallel zu der Hauptbrennstoffzuführung (11) angeordnet ist, **dadurch gekennzeichnet, dass** ein Einlass des Behälters (20) stromaufwärts eines Auslasses des Behälters (20) angeordnet ist und der Behälter (20) mit der Hauptbrennstoffzuführung (11) über ein Ventil (30) verbunden ist, um unter einer ersten vorbestimmten Bedingung mit Flüssigbrennstoff gefüllt zu werden, der von der Hauptbrennstoffzuführung (11) eingespeist wird, und/oder der Behälter (20) mit der Hauptbrennstoffzuführung (11) über ein Ventil (31) verbunden ist, um unter einer zweiten vorbestimmten Bedingung von erwärmtem Flüssigbrennstoff, der in dem Behälter (20) erwärmt wurde, in die Hauptbrennstoffzuführung (11) entleert zu werden.

2. Anordnung zur Vorbereitung eines Flüssigbrennstoffs für die Verbrennung nach einem der vorhergehenden Ansprüche, wobei der Behälter (20) so bemessen ist, dass er Flüssigbrennstoff für einen, zwei oder mehrere Starts einer Gasturbine aufnehmen kann.

3. Anordnung zur Vorbereitung eines Flüssigbrennstoffs für die Verbrennung nach einem der vorhergehenden Ansprüche, wobei die Anordnung oder der Behälter (20) einen Sensor (40), insbesondere einen Thermosensor und/oder ein Thermoelement, umfasst, der ein Signal erzeugt, um anzuzeigen, wenn eine Temperatur des Flüssigbrennstoffs, der in dem Behälter (20) zu erwärmen ist, einen vorbestimmten Temperaturwert, d. h. ein gewünschtes Niveau, erreicht hat, und/oder wobei die Anordnung oder der Behälter (20) ein Rohr (21), ein Rückführrohr (22) und einen Kanal umfasst, die einen Strömungskreis (10) in dem Behälter (20) oder mit dem Behälter (20) als einem Teil eines Strömungskreises (10) realisieren.

4. Anordnung zur Vorbereitung eines Flüssigbrennstoffs für die Verbrennung nach dem vorhergehenden Anspruch, wobei die Anordnung oder der Behälter (20) eine Pumpe (23) umfasst, um den Flüssigbrennstoff entlang des Rohres (21) und des Kanals aus dem Behälter (20) in Richtung eines Brenners (9) zu pumpen und/oder um den Flüssigbrennstoff in dem Strömungskreis (10) umzuwälzen.

5. Anordnung zur Vorbereitung eines Flüssigbrennstoffs für die Verbrennung nach einem der vorhergehenden Ansprüche, wobei ein Strömungskreis (10) in dem Behälter (20) oder mit dem Behälter (20) als einem Teil des Strömungskreises (10) realisiert wird.

6. Anordnung zur Vorbereitung eines Flüssigbrennstoffs für die Verbrennung nach einem der vorhergehenden Ansprüche, wobei die Anordnung, der Behälter (20) oder der Strömungskreis (10) wenigstens ein Ventil (30, 31) umfasst, insbesondere ein Zweiwegeventil und/oder eines, das an einem Einlassende ("Einfüllende") (25) und/oder einem Auslassende ("Entleerungsende") (26) des Behälters (20) oder des Strömungskreises (10) angeordnet ist.

7. Anordnung zur Vorbereitung eines Flüssigbrennstoffs für die Verbrennung nach einem der vorhergehenden Ansprüche, wobei der Flüssigbrennstoff ein unter Druck stehender Flüssigbrennstoff ist und/oder der Flüssigbrennstoff ein Premium-Flüssigbrennstoff, insbesondere Kerosin oder ein Heizöl, für eine trockene schadstoffarme Verbrennung ist.

8. Anordnung zur Vorbereitung eines Flüssigbrennstoffs für die Verbrennung nach einem der vorhergehenden Ansprüche, welche für einen Betrieb in zwei Phasen verwendet wird,
- einer Erwärmungsphase, in der eine Gasturbine darauf vorbereitet wird, mit Flüssigbrennstoff zu starten, und
- einer Startphase, in der die Gasturbine gestartet wird.

9. Anordnung zur Vorbereitung eines Flüssigbrennstoffs für die Verbrennung nach dem vorhergehenden Anspruch, welche in der Erwärmungsphase verwendet wird, wobei
- Ventile (30, 31), die insbesondere an einem Einlassende (25) und/oder an einem Auslassende (26) des Behälters (20) oder Strömungskreises (10) angeordnet sind, so geschaltet werden, dass dieser Behälter (20) durch die/aus der Hauptbrennstoffzuführung (11) mit nicht erwärmtem Flüssigbrennstoff gefüllt wird und/oder Flüssigbrennstoff in diesem Behälter (20) isoliert wird,
- das Erwärmungsmittel (24) zum Erwärmen des isolierten Flüssigbrennstoffs in dem Behälter (20), insbesondere des in dem Behälter (20) zirkulierenden Flüssigbrennstoffs, eingeschaltet wird,
- ein Thermosensor (40) anzeigt, wenn eine Temperatur des Flüssigbrennstoffs, der in dem Behälter (20) zu erwärmen ist, genügend hoch für das Starten der Gasturbine ist, und
- das Erwärmungsmittel (24) ausgeschaltet wird, wenn diese Temperatur erreicht ist.

10. Anordnung zur Vorbereitung eines Flüssigbrennstoffs für die Verbrennung nach dem vorhergehenden Anspruch, welche in der Erwärmungsphase verwendet wird, wobei
die Anordnung dafür eingerichtet ist, dass, falls die Temperatur des Flüssigbrennstoffs unter einen Schwellenwert abfällt, bevor die Gasturbine gestartet wird, das Erwärmungsmittel (24) erneut eingeschaltet wird.

11. Anordnung zur Vorbereitung eines Flüssigbrennstoffs für die Verbrennung nach Anspruch 5, welche in der Startphase verwendet wird, wobei
Ventile (30, 31), die insbesondere an einem Einlassende (25) und/oder an einem Auslassende (26) des Behälters (20) oder Strömungskreises (10) angeordnet sind, so geschaltet werden, dass Flüssigbrennstoff, der in die Hauptbrennstoffzuführung (11) eingespeist wird, in das Einlassende (25) des Behälters (20) oder Strömungskreises (10) eintritt und den erwärmten Flüssigbrennstoff aus dem Behälter (20) zurück in die Hauptbrennstoffzuführung (11) drückt.

12. Anordnung zur Vorbereitung eines Flüssigbrennstoffs für die Verbrennung nach einem der vorhergehenden Ansprüche, welche für einen Rückführkreis (10) zum Erwärmen von unter Druck stehendem Flüssigbrennstoff verwendet wird, damit dieser verdampft, wenn er sich während eines Starts einer Gasturbine auf einen niedrigeren Druck entspannt.

13. Verfahren zum Vorbereiten eines Flüssigbrennstoffs für die Verbrennung, insbesondere für die Zündung, welches die folgenden Schritte umfasst:
- Füllen, unter einer ersten vorbestimmten Bedingung, eines Behälters (20) mit Flüssigbrennstoff eines Brennstoffstroms, der in eine Hauptbrennstoffzuführung (11) eingespeist wird, wobei der Behälter (20) parallel zu der Hauptbrennstoffzuführung (11) angeordnet ist,
- Erwärmen von Flüssigbrennstoff in dem Behälter (20),
- Entleeren, unter einer zweiten vorbestimmten Bedingung, des Behälters (20) von erwärmtem Flüssigbrennstoff, der in dem Behälter (20) erwärmt wurde, in die Hauptbrennstoffzuführung (11) stromabwärts der Einfüllstelle.

14. Verfahren zum Vorbereiten eines Flüssigbrennstoffs für die Verbrennung nach einem der vorhergehenden Verfahrensansprüche, wobei
die erste vorbestimmte Bedingung einen Zeitpunkt definiert oder mit einem Zeitpunkt korreliert, wenn eine Gasturbine mit den Vorbereitungen zum Starten beginnt, und/oder die zweite vorbestimmte Bedingung einen Zeitpunkt definiert oder mit einem Zeitpunkt korreliert, wenn die Gasturbine gestartet wird.

15. Verfahren zum Vorbereiten eines Flüssigbrennstoffs für die Verbrennung nach einem der vorhergehenden Verfahrensansprüche, wobei die zweite vorbestimmte Bedingung mit einem Zeitpunkt korreliert, zu dem der Flüssigbrennstoff, der in dem Behälter (20) zu erwärmen ist, eine spezifische/geeignete Temperatur erreicht, oder mit einem Zeitpunkt, zu dem ein Erwärmungszeitraum/eine Erwärmungsdauer abgelaufen ist.

16. Verfahren zum Vorbereiten eines Flüssigbrennstoffs für die Verbrennung nach einem der vorhergehenden Verfahrensansprüche, wobei ein Erwärmungsvorgang des Flüssigbrennstoffs in dem Behälter (20) bei einer vorbestimmten Temperatur gestoppt wird, die insbesondere von einem Thermoelement (40) gemessen wird und/oder von einem Steuerungssystem gesteuert wird.

17. Verfahren zum Vorbereiten eines Flüssigbrennstoffs für die Verbrennung nach dem vorhergehenden Verfahrensanspruch, wobei die vorbestimmte Temperatur genügend hoch ist, um eine Verdampfungsmenge von Brennstoff zu erhöhen, wenn er in einem Brenner (9) zerstäubt wird.

18. Verfahren zum Vorbereiten eines Flüssigbrennstoffs für die Verbrennung nach einem der vorhergehenden Verfahrensansprüche, wobei die Hauptbrennstoffzuführung (11)/Versorgung der Brenner (9) eines Verbrennungssystems (3) nach der Zündung des Brennstoffs zu einer Zuführung von nicht erwärmtem Brennstoff in der Hauptbrennstoffzuführung (11)/Versorgung zurückgeschaltet wird.

19. Verfahren zum Vorbereiten eines Flüssigbrennstoffs für die Verbrennung nach einem der vorhergehenden Verfahrensansprüche, wobei, insbesondere durch Verwendung wenigstens eines Ventils (30, 31), das in dem Strömungskreis (10) positioniert ist, insbesondere am Auslassende (26) des Behälters (20) oder des Strömungskreises (10), der Flüssigbrennstoff geleitet wird (im Behälter) entweder
a) zurück zum Behälter (20) in einer Erwärmungsphase oder einer Phase des normalen Betriebs, oder
b) in Rohre zu Brennern (9) in einer Startphase.

20. Verfahren zum Vorbereiten eines Flüssigbrennstoffs für die Verbrennung nach einem der vorhergehenden Verfahrensansprüche, wobei der Flüssigbrennstoff der Hauptbrennstoffzuführung (11)/Versorgung geleitet wird entweder
a) direkt in einen Brenner (9) für einen normalen Betrieb oder in einer Erwärmungsphase, oder
b) in Richtung des Behälters (20) in einer Startphase.

21. Verfahren zum Vorbereiten eines Flüssigbrennstoffs für die Verbrennung nach einem der vorhergehenden Verfahrensansprüche, wobei ein Druck des nicht erwärmten/kalten Brennstoffs der Hauptbrennstoffzuführung (11)/Versorgung den erwärmten Flüssigbrennstoff aus dem Behälter (20) treibt.

## Revendications

1. Montage servant à préparer un combustible liquide en vue de sa combustion, notamment de son inflammation, comprenant une amenée principale (11) de combustible pour amener du combustible liquide à partir d'une alimentation (12) en combustible jusqu'à un brûleur (9), un réservoir (20) de combustible liquide et un moyen pour chauffer (24) le combustible liquide dans ledit réservoir (20), étant entendu que ledit réservoir (20) est monté en parallèle avec ladite amenée principale (11) de combustible, **caractérisé en ce qu'**une entrée dudit réservoir (20) est montée en amont d'une sortie dudit réservoir (20) et **en ce que** ledit réservoir (20) est relié à ladite amenée principale (11) de combustible par une vanne (30) en vue d'être rempli, dans un premier état prédéterminé, de combustible liquide amené par ladite amenée principale (11) de combustible et/ou **en ce que** ledit réservoir (20) est relié à ladite amenée principale (11) de combustible par une vanne (31) en vue de l'évacuation, dans un second état prédéterminé, de combustible liquide chauffé, chauffé dans ledit réservoir (20), dans ladite amenée principale (11) de combustible.

2. Montage servant à préparer un combustible liquide en vue de sa combustion selon l'une quelconque des revendications précédentes, dans lequel ledit réservoir (20) est dimensionné pour contenir du combustible liquide en vue d'une, de deux ou de plusieurs mises en marche d'une turbine à gaz.

3. Montage servant à préparer un combustible liquide en vue de sa combustion selon l'une quelconque des revendications précédentes, dans lequel ledit montage ou ledit réservoir (20) comprend un capteur (40), notamment un capteur thermique et/ou un thermocouple, produisant un signal pour indiquer quand une température dudit combustible liquide à chauffer dans ledit réservoir (20) a atteint une température prédéterminée, c'est-à-dire un niveau voulu, et/ou dans lequel ledit montage ou ledit réservoir (20) comprend une canalisation (21), une canalisation de retour (22), une conduite réalisant un circuit d'écoulement (10) dans ledit réservoir (20) ou ledit réservoir (20) faisant partie d'un circuit d'écoulement (10).

4. Montage servant à préparer un combustible liquide en vue de sa combustion selon la revendication précédente, dans lequel ledit montage ou ledit réservoir (20) comprend une pompe (23) pour pomper le combustible liquide dans ladite canalisation (21) et dans ladite conduite allant dudit réservoir (20) vers un brûleur (9) et/ou pour faire circuler le combustible liquide dans ledit circuit d'écoulement (10).

5. Montage servant à préparer un combustible liquide en vue de sa combustion selon l'une quelconque des revendications précédentes, dans lequel un circuit d'écoulement (10) est réalisé dans ledit réservoir (20) ou ledit réservoir (20) faisant partie du circuit d'écoulement (10).

6. Montage servant à préparer un combustible liquide en vue de sa combustion selon l'une quelconque des revendications précédentes, dans lequel ledit montage, ledit réservoir (20) ou ledit circuit d'écoulement (10) comprend au moins une vanne (30, 31), notamment une vanne à deux voies, et/ou montée à une extrémité d'entrée (« extrémité de remplissage ») (25) et/ou à une extrémité de sortie (« extrémité d'évacuation ») (26) dudit réservoir (20) ou circuit d'écoulement (10).

7. Montage servant à préparer un combustible liquide en vue de sa combustion selon l'une quelconque des revendications précédentes, dans lequel ledit combustible liquide est un combustible liquide sous pression et/ou ledit combustible liquide est un supercombustible liquide, notamment du kérosène ou une huile de chauffe, prévu pour une combustion à faibles émissions par voie sèche.

8. Montage servant à préparer un combustible liquide en vue de sa combustion selon l'une quelconque des revendications précédentes, utilisé pour fonctionner en deux phases :
- une phase de chauffage dans laquelle une turbine à gaz est préparée pour être mise en route avec du combustible liquide, et
- une phase de mise en route pendant laquelle la turbine à gaz est mise en route.

9. Montage servant à préparer un combustible liquide en vue de sa combustion selon la revendication précédente, utilisé pendant la phase de chauffage étant entendu que :
- les vannes (30, 31), notamment montées à une extrémité d'entrée (25) et/ou à une extrémité de sortie (26) dudit réservoir (20) ou circuit d'écoulement (10), sont/est manoeuvrée(s) de telle sorte que ledit réservoir (20) est rempli de combustible liquide non chauffé par/à partir de l'amenée principale (11) de combustible et/ou le combustible liquide est isolé dans ledit réservoir (20) ;
- le moyen de chauffage (24) est allumé pour chauffer le combustible liquide isolé dans ledit réservoir (20), notamment le combustible liquide circulant dans ledit réservoir (20) ;
- un capteur thermique (40) indique quand une température du combustible liquide à chauffer dans ledit réservoir (20) est assez élevée pour mettre la turbine à gaz en marche, et
- ledit moyen de chauffage (24) est éteint lorsque cette température est atteinte.

10. Montage servant à préparer un combustible liquide en vue de sa combustion selon la revendication précédente, utilisé pendant la phase de chauffage étant entendu que :
le montage est adapté de sorte que, si la température dudit combustible liquide tombe sous un seuil avant que la turbine à gaz ne soit mise en marche, ledit moyen de chauffage (24) soit rallumé.

11. Montage servant à préparer un combustible liquide en vue de sa combustion selon la revendication 5, utilisé pendant la phase de chauffage étant entendu que :
les vannes (30, 31), notamment montées à une extrémité d'entrée (25) et/ou à une extrémité de sortie (26) du réservoir (20) ou circuit d'écoulement (10), sont/ est manoeuvrée(s) de telle sorte que le combustible liquide amené dans ladite amenée principale (11) de combustible pénètre dans l'extrémité d'entrée (25) dudit réservoir (20) ou circuit d'écoulement (10) et repousse ledit combustible liquide chauffé hors dudit réservoir (20) dans ladite amenée principale (11) de combustible.

12. Montage servant à préparer un combustible liquide en vue de sa combustion selon l'une quelconque des revendications précédentes, utilisé pour un circuit de remise en circulation (10) en vue de chauffer du combustible liquide sous pression afin de le faire s'évaporer lorsqu'il est détendu à une pression plus basse pendant la mise en marche d'une turbine à gaz.

13. Procédé de préparation d'un combustible liquide en vue de sa combustion, notamment de son inflammation, comprenant les étapes consistant :
- à remplir, dans le premier état prédéterminé, un réservoir (20) du combustible liquide d'un courant de combustible dans une amenée principale (11) de combustible, ledit réservoir (20) étant monté en parallèle avec ladite amenée principale (11) de combustible ;
- à chauffer le combustible liquide dans ledit réservoir (20), et
- à évacuer, dans un second état prédéterminé, ledit réservoir (20) de combustible liquide chauffé, chauffé dans ledit réservoir (20), dans ladite amenée principale (11) de combustible en aval dudit remplissage.

14. Procédé de préparation d'un combustible liquide en vue de sa combustion selon l'une quelconque des revendications de procédé précédentes, dans lequel :
ledit premier état prédéterminé définit, ou est corrélé avec,
un moment auquel on commence à préparer une turbine à gaz en vue de la mettre en marche, et/ou
ledit second état prédéterminé définit, ou est corrélé avec,
un moment auquel on met la turbine à gaz en marche.

15. Procédé de préparation d'un combustible liquide en vue de sa combustion selon l'une quelconque des revendications de procédé précédentes, dans lequel ledit second état prédéterminé est corrélé avec un moment auquel ledit combustible liquide à chauffer dans ledit réservoir (20) atteint une température spécifique/appropriée, ou avec un moment auquel une période/durée de chauffage expire.

16. Procédé de préparation d'un combustible liquide en vue de sa combustion selon l'une quelconque des revendications de procédé précédentes, dans lequel une opération de chauffage dudit combustible liquide dans ledit réservoir (20) est arrêtée à une température prédéterminée, notamment mesurée par un thermocouple (40) et/ou régulée par un système de régulation.

17. Procédé de préparation d'un combustible liquide en vue de sa combustion selon l'une quelconque des revendications de procédé précédentes, dans lequel ladite température prédéterminée est assez élevée pour augmenter un taux de vaporisation de combustible lorsqu'il est atomisé dans un brûleur (9).

18. Procédé de préparation d'un combustible liquide en vue de sa combustion selon l'une quelconque des revendications de procédé précédentes, dans lequel ladite amenée principale (11) de combustible/alimentation des brûleurs (9) d'un système de combustion (3) est à nouveau réglée de façon à amener du combustible non chauffé dans ladite amenée principale (11) de combustible/alimentation après ladite inflammation du combustible.

19. Procédé de préparation d'un combustible liquide en vue de sa combustion selon l'une quelconque des revendications de procédé précédentes, dans lequel, notamment en utilisant au moins une vanne (30, 31) positionnée dans ledit circuit d'écoulement (10), notamment à l'extrémité de sortie (26) du réservoir (20) ou circuit d'écoulement (10), le combustible liquide est dirigé (dans le réservoir) :
a) soit pour retourner dans le réservoir (20), pendant une phase de chauffage ou une phase normale de fonctionnement ;
b) soit dans des canalisations jusqu'aux brûleurs (9), pendant une phase de mise en marche.

20. Procédé de préparation d'un combustible liquide en vue de sa combustion selon l'une quelconque des revendications de procédé précédentes, dans lequel ledit combustible liquide de ladite amenée principale (11) de combustible/alimentation est dirigé :
a) soit directement dans un brûleur (9) en vue d'un fonctionnement normal ou pendant une phase de chauffage ;
b) soit vers ledit réservoir (20), pendant une phase de mise en marche.

21. Procédé de préparation d'un combustible liquide en vue de sa combustion selon l'une quelconque des revendications de procédé précédentes, dans lequel une pression du combustible non chauffé/froid de ladite amenée principale (11) de combustible/alimentation chasse ledit combustible liquide chauffé hors dudit réservoir (20).
